# EUROPÄISCHE PATENTSCHRIFT

(11) **EP 1 188 210 B1**
(45) Veröffentlichungstag und Bekanntmachung des Hinweises auf die Patenterteilung: **19.03.2003**
(21) Anmeldenummer: 00930959.2
(22) Anmeldetag: 13.06.2000
(51) Int. Cl.: H02G 15/072, H02G 15/06

(54) **HOCHSPANNUNGS-DURCHFÜHRUNG**
HIGH VOLTAGE LEAD-THROUGH
TRAVERSEE HAUTE TENSION

(30) Priorität: 14.06.1999 DE 19926950
(43) Veröffentlichungstag der Anmeldung: 20.03.2002
(73) Patentinhaber: ABB RESEARCH LTD., 8050 Zürich (CH)
(72) Erfinder: GREUTER, Felix, CH-5406 Baden-Rütihof (CH); CHRISTEN, Thomas, CH-5300 Vogelsang (CH); KLUGE-WEISS, Petra, CH-5405 Baden (CH)
(74) Vertreter: ABB Patent Attorneys
(86) Internationale Anmeldenummer: CH0000320
(87) Internationale Veröffentlichungsnummer: WO00077904

(56) Entgegenhaltungen:
- EP-A- 0 388 779
- WO-A-97/31417
- CH-A- 659 550
- DE-B- 1 235 419
- US-A- 5 517 382
- US-A- 5 602 710

## Beschreibung

### TECHNISCHES GEBIET

Bei der Erfindung wird ausgegangen von einer Hochspannungs-Durchführung nach dem Oberbegriff von Patentanspruch 1.

### STAND DER TECHNIK

Mit dem Oberbegriff des Patentanspruchs 1 nimmt die Erfindung auf einen Stand der Technik Bezug, wie er in EP-A2-0 388 779 beschrieben ist. Die vorbekannte Durchführung ist als Kabelsteckverbindung ausgebildet und weist eine als Rohr ausgeführte Varisteranordnung auf sowie einen längs der Rohrachse geführten und mit einer Aussenisolation versehenen Stromleiter eines Hochspannungskabels, einen zwischen der Aussenisolation und der Innenfläche des Rohrs angeordneten, feldsceuernden Isolierkörper und einen die Varistoranordnung ummantelnden, witterungsbeständigen Aussenisolator. Ein mit einem metallischen, geerdeten Schutzmantel des Kabels verbundener Stromanschluss ist über Federelemente mit dem unteren Ende der Varistoranordnung elektrisch leitend verbunden. Das obere Ende der Varistoranordnung ist mit einem Stromanschluss elektrisch leitend verbunden, welcher an den Stromleiter und einen an Freiluft befindlichen Anschlussleiter angeschlossen ist. Durch Verdrehen einer auf dem oberen Stromanschluss abgestützten Schraubenmutter werden der Anschlussleiter und der damit kraftschlüssig verbundene Stromleiter vorgespannt und wird so in der Varistoranordnung und auch zwischen dem unteren und oberen Ende der Varistoranordnung und den beiden Stromanschlüssen Kontaktkraft gebildet.

Diese Durchführung zeichnet sich dadurch aus, dass sie auf engem Raum sowohl das sichere Ausführen des Kabelstromleiters aus dem geerdeten Kabelmantel ermöglicht als auch das Begrenzen von Überspannungen, welche über den beispielsweise mit einer Freileitung verbundenen Anschlussleiter herbeigeführt werden können.

In der Veröffentlichung von Walter Schmidt, Metalloxid - ein fast idealer Öberspannungsableiter, Schweizer Bulletin SEV/VSE 7/1998, S. 13 - 20, sind durch Polymerkunststoffe isolierte Metalloxid-Überspannungsableiter für explosionssicheren Betrieb nach Konstruktionsprinzipien des Verbundisolators, des Lagenverbundes und des Direktvergusses angegeben. Durch vollständige Integration der Metalloxid-Widerstände in die polymere Isolationsstruktur verbessern sich die Isolationsniveaus, die Systemzuverlässigkeit und die Wirtschaftlichkeit. Durch Integration der Ableiter mit anderen elektrotechnischen Komponenten, wie Kabelendverschlüssen oder Durchführungen, z. B. bei Transformatoren, darf eine weitere Verbesserung der Schutzfunktion erwartet werden.
Nähere Angaben über die Ausführung dieser Integration fehlen.

In der CH 659 550 A5 sind spannungsbegrenzende Leiterdurchführungen mit Varistoren als Überspannungsbegrenzern angegeben, bei denen mehrere ringscheibenförmige Varistoren, vorzugsweise aus Zinkoxid, elektrisch in Reihe geschaltet sind und der zylindrische, elektrische Leiter durch deren zentrale Öffnung geführt ist. Die einander zugewandten Kontaktflächen der Varistorscheiben können durch eine dünne, elektrisch leitende Zwischenschicht, z. B. aus Löt- oder Diffusionsschweissmittel, getrennt sein.

Aus der Veröffentlichung von Jeffry P. Mackevich und John W. Hoffmann, Insulation Enhancement with Heat-Shrinkable Components Part III: Shield Power Cable, IEEE Electrical Insulation Magazine, July/August 1991, Vol. 7, No. 4, S. 31 - 40, ist es bekannt, elektrische Kabel auf deren dielektrischen Kabelisolationsschicht mit einem spezifischen elektrischen Widerstand von 10⁴ Ω · cm mittels einer halbleitenden, sogenannten Semicon-Schicht, die durch Extrudieren oder Aufwickeln aufgebracht sein kann, elektrisch abzuschirmen. Kabelverbindungen und Endverschlüsse sind aussenseitig elektrisch isoliert und stellenweise elektrisch abgeschirmt, um Feldüberhöhungen zu minimieren oder Berührungsschutz sicherzustellen.

### DARSTELLUNG DER ERFINDUNG

Die Erfindung, wie sie in den Patentansprüchen definiert ist, liegt die Aufgabe zugrunde, eine Durchführung der eingangs genannten Art derart weiterzuentwickeln, dass sie in einfacher Weise geprüft, montiert und gewartet werden kann.

Bei der Durchführung nach der Erfindung wird ein in die Durchführung integrierter Überspannungsableiter durch Verspannen der beiden Stromanschlüsse und der Varistoranordnung mit Hilfe eines Isolierteils gebildet. Die Durchführung kann so ohne Verwendung eines in einem Kabel oder in einem elektrischen Apparat, beispielsweise einem Transformator, eingesetzten Stromleiters hergestellt werden. Da in den Durchführungsisolator zugleich ein mit einer Führungsfläche versehenes Tragelement für einen mit dem Stromleiter verbundenen Steckkontakt einer Steckverbindung mit einem Kabel oder einem elektrischen Apparat eingeformt ist, kann der Durchführungsisolator vollständig vorgefertigt und am Montageort durch Einstecken schnell und einfach an eine Gehäusedurchführung eines elektrischen Apparats, etwa einen Transformator, oder an ein Kabel, angebaut werden.

Für den Anschluss an ein konisch auslaufendes Ende einer Gerätedurchführung oder eines Kabels ist die Führungsfläche als Aussen- oder als Innenkonus ausgeführt. Für den Anschluss an ein zylinderförmig auslaufendes Ende einer Gerätedurchführung oder eines Kabels, beispielsweise eine Kabelmuffe, ist die Führungsfläche als Mantelfläche eines Zylinders oder als Innenfläche eines Hohlzylinders ausgeführt. Durch das Zusammenwirken der Führungsfläche mit einer entsprechenden Führungsfläche der Gerätedurchführung oder des Kabels kann in leichter und sicherer Weise eine mechanisch feste und dielektrisch hochwertige Steckverbindung hergestellt werden.

In einer besonders vorteilhaften Ausführungsform der Erfindung ist der mit Hochspannung verbindbare Stromanschluss lösbar angeordnet und durch eine isolierende Prüfkappe ersetzbar. Bei der Fertigung der Durchführung kann dann anstelle dieses Stromanschlusses zunächst die aus Isoliermaterial bestehende Prüfkappe eingebaut werden. Dadurch wird der Spannungsabfall im Überspannungsableiter erheblich reduziert. Die Durchführung und der damit verbundene Apparat oder die damit verbundene Anlage können nun mit Hochspannungsprüfimpulsen belastet werden, die den Ableiter sonst zerstören würden.

In einer weiteren vorteilhaften Ausführungsform der Durchführung nach der Erfindung ist in einen von der Varistoranordnung umgebenen Abschnitt des Stromleiters eine Überstromsicherung 20 eingebaut. Diese Durchführung wirkt, ohne wesentlichen zusätzlichen Raum zu beanspruchen, nicht nur spannungs- sondern zugleich auch strombegrenzend.

Ein wirksamer Schutz des Stromleiters oder einer Isolierung des Stromleiters bei einer Überlastung der Varistoranordnung ist gegeben, wenn die Spannvorrichtung rohrförmig ausgebildet ist und zwischen dem Stromleiter und der Varistoranordnung angeordnet ist.

Besonders kompakte Durchführungen mit dielektrisch günstigem Verhalten werden erreicht, wenn die Varistoranordnung hohle Varistoren aufweist mit einem an die Form des Stromleiters angepassten Innenprofil und/oder einem ovalen oder rechteckigen Aussenprofil, und/oder wenn die die Varistoranordnung hohl und axialsymmetrisch ausgebildet ist und in Richtung des Stromleiters konus- oder flaschenförmige Kontur aufweist.

Zweckmässigerweise sind die Varistoren in Richtung des Stromleiters geteilt ausgeführt, da dann die Varistoren der Varistoranordnung nicht nur besonders leicht herzustellen sind, sondern zudem auch ein besonders einfache Montage und Wartung der Durchführung gewährleistet ist.

Das dielektrische Verhalten der Durchführung kann zusätzlich verbessert werden, wenn der Durchführungsisolator am Tragkörper spannungslinearisierend ausgebildet ist.

### KURZE BESCHREIBUNG DER ZEICHNUNGEN

Die Erfindung wird nachstehend anhand von Ausführungsbeispielen erläutert. Es zeigen:
- Fig. 1: schematisch einen Längsschnitt durch eine Ausführungsform der Durchführung nach der Erfindung in Verbindung mit einer Transformatordurchführung,
- Fig. 2a - 2e: Querschnitte durch Varistoren, wie sie in der Durchführung gemäss Fig.1 werden können,
- Fig. 3: schematisch einen Längsschnitt durch eine als Kabelsteckverbindung ausgebildete und einen Aussenkonus aufweisende Ausführungsform der Durchführung nach der Erfindung,
- Fig. 4: schematisch einen Längsschnitt durch einen Teil einer als Kabelsteckverbindung ausgebildeten und einen Innenkonus aufweisenden Ausführungsform der Durchführung nach der Erfindung,
- Fig. 5: schematisch einen Längsschnitt durch eine als Freiluftdurchführung ausgebildete und ein Winkelverbindungsteil aufweisende Ausführungsform der Durchführung nach der Erfindung,
- Fig. 6: schematisch einen Längsschnitt durch eine als Kabelsteckverbindung ausgebildete und eine Überstromsicherung aufweisende Ausführungsform der Durchführung nach der Erfindung,
- Fig. 7a - 7c: schematische Längsschnitte durch jeweils als Kabel steckverbindung ausgebildete Ausführungsformen der Durchführung nach der Erfindung in Verbindung mit einer Transformatordurchführung,
- Fig. 8: schematisch einen Längsschnitt durch eine als T-förmige Kabelsteckverbindung ausgebildete Ausführungsform der Durchführung nach der Erfindung, und
- Fig. 9: schematisch zwei Durchführungen nach der Erfindung, die durch einen flexiblen Stromleiter miteinander verbunden sind.

### WEGE ZUR AUSFÜHRUNG DER ERFINDUNG

In den Figuren sind gleiche Teile mit gleichen Bezugszeichen gekennzeichnet.

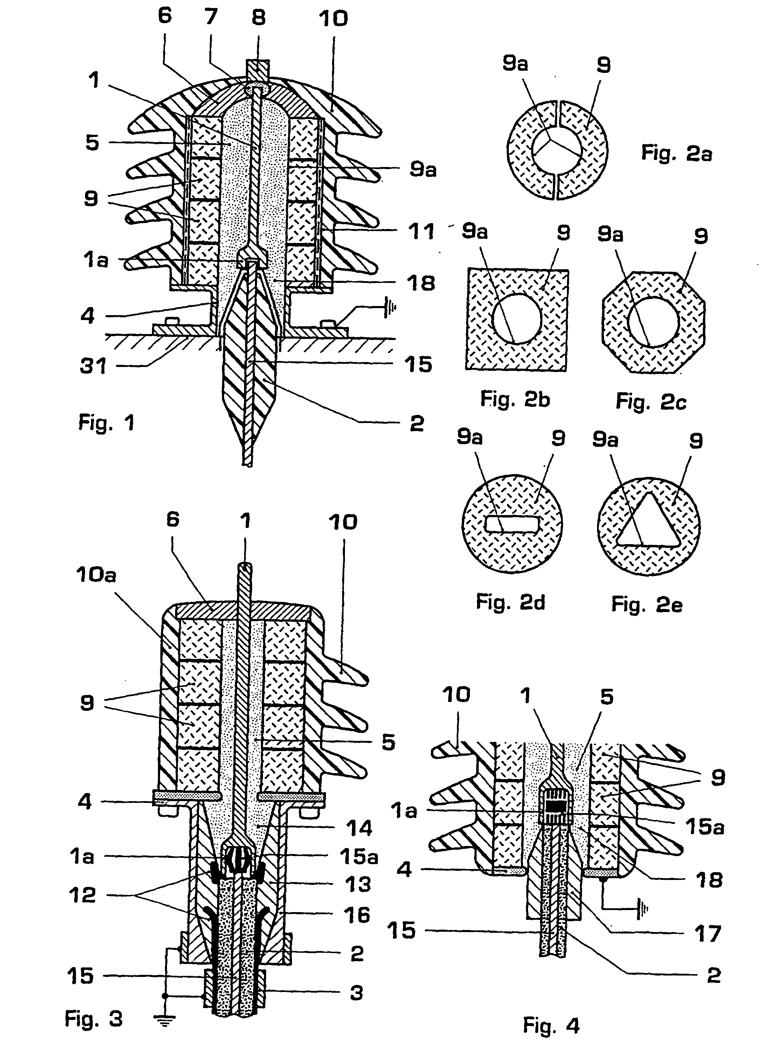

Fig. 1 zeigt im Längsschnitt eine Durchführung nach der Erfindung, welche auf eine Durchführung aufgesteckt ist, die einen hochspannungsführenden Stromleiter 15, mit Hilfe eines Durchführungsisolators 2 durch die geerdete Wand 31 eines Transformators führt. Die erfindungsgemässe Durchführung weist einen mit Hochspannung beaufschlagbaren Stromleiter 1 auf. Konzentrisch um diesen Stromleiter sind ringscheibenförmige Varistoren einer Varistoranordnung 9 angeordnet und untereinander elektrisch in Reihe geschaltet. Endseitig ist die Varistoranordnung 9 durch ein scheibenförmiges Kontaktteil eines Stromanschlusses 4 mit dem Transformatorgehäuse 31 und durch einen Stromanschluss 6 über ein Verbindungsglied 7 einerseits mit dem Stromleiter 1 und andererseits mit einem an Freiluft befindlichen Stromleiter 8 elektrisch verbunden. Das Verbindungsglied 7 kann eine mechanische Fixierung, z. B. Verschraubung oder Steckverbindung, oder eine Verlötung sein. Der Anschlussstromleiter 8 kann z. B. mit einer Freileitung in elektrischer Verbindung stehen. Ausserhalb der Varistoranordnung 9 ist eine gestrichelt angedeutete Spannvorrichtung 11 angeordnet mit einem Isolierteil, beispielsweise einem Isolierzylinder oder mehreren schlaufenartig ausgebildeten Zugbänder, zum Verspannen der sandwichartig zwischen den beiden Stromanschlüssen 4 und 6 liegenden Varistoren. Diese Spanneinrichtung 11 und der Stromanschluss 6 sind in einen freiluftbeständigen, elektrischen Isolator bzw. Freiluftisolator 10, vorzugsweise aus einem Silikonelastomer, Äthylen-Propylen-Dien-Monomer- (EPDM-) oder Äthylen-Vinyl-Azetat- (EVA)-Kunststoff, Epoxidharz oder aus Polyurethan, eingeschlossen.

Zwischen dem Stromleiter 1, dem scheibenförmigen Stromanschluss 4, Varistorinnenflächen 9a und dem Stromanschluss 6 befindet sich ein Durchführungsisolator 5 aus einer flexiblen, formbaren Giess-, Press- oder Knetmasse, wie insbesondere einem Polymer auf der Basis Silikon, Epoxy oder Polyurethan, oder einem feinporigen Polymerschaum. Der Durchführungsisolator kann auch geteilt ausgeführt sein und jeweils kombiniert mit einem dielektrisch hochwertigen Gel, Öl oder Gas sein. Am unteren Ende ist in den Durchführungsisolator ein Innenkonus 18 eingeformt, welcher als Tragelement dient für einen mit dem Stromleiter 1 verbundenen Kontakt 1a einer Steckverbindung mit einem nichtbezeichneten Gegensteckkontakt der Transformator-Durchführung. Die Dielektrizitätskonstante des Materials des Isolators 5 ist > 1, vorzugsweise > 2, und seine Wärmeleitfähigkeit < 0,5 W/(m · K), vorzugsweise < 0,3 W/(m · K). Der Durchführungsisolator 5 isoliert den Stromleiter 1 gegenüber Erde und bewirkt eine kapazitive Kopplung zwischen dem Stromleiter 1 und den das elektrische Feld bestimmenden Varistoren. Er gewährleistet ein besseres dynamisches Verhalten der Varistoranordnung beim Auftreten von Stossspannungen. Zur zusätzlichen Verbesserung der Linearisierung des elektrischen Feldes kann in den Innenkonus 18 des Durchführungsisolators 5 ein spannungslinearisierende Körper, beispielsweise ein Steuerelektroden enthaltender Wickelkörper oder spannungslinearisierendes Isoliermaterial eingebaut werden. Anstelle des Innenkonus kann auch ein Aussenkonus bei entsprechendem apparateseitigem Gegenstück gewählt werden.

Die Fig. 2a - 2e zeigen schematisch unterschiedlich gestaltete Varistoren der Varistoranordnung 9 im Querschnitt. Diese Varistoren können z. B. als Hohlzylinder mit kreisringförmigem Querschnitt oder als einfach bzw. mehrfach geteiltes Bauelement für seitliche Montage gemäss Fig. 2a und mit einer Aussparung zur Aufnahme eines mit Isoliermaterial bemantelten Stromleiters (Kabel) oder eines nicht isolierten Stromleiters ausgebildet sein. Die Varistoren können z. B. ovale (Fig. 2d) oder dreieckförmige (Fig. 2e) Ausschnitte aufweisen, aussen z. B. rechteckig (Fig. 2b) oder achteckig (Fig. 2c) ausgeführt sein; sie können sich im Querschnitt mit zunehmender Tiefe konus- oder flaschenförmig verengen oder erweitern oder aber auch als massive Säulen oder Scheiben ausgebildet, vorzugsweise drehsymmetrisch, zur Achse des Stromleiters angeordnet sein.

Fig. 3 zeigt einen Längsschnitt durch eine Kabelsteckverbindung mit integrierter Varistoranordnung mit einem Durchführungsisolator 5 mit einem anschlussseitig sich verengenden Aussenkonus 14. Das Material des Isolators 5 ist ein Feststoffisolator, z.B. Epoxidharz oder Silikon. Es umgibt direkt den Stromleiter 1, der einerseits aus dem Stromanschluss 6 herausragt und mit diesem elektrisch verbunden ist; er weist andererseits eine Steckbuchse 1a auf, welche mit einem Gegensteckkontakt 15a am Ende eines Stromleiters 15 eines Kabels mit einer Isolation 2 und einer halbleitenden Schutzschicht 3 in elektrisch gutleitender Verbindung steht. In Freiluft ist die Varistoranordnung 9 in einem Freiluftisolator 10, bei Verwendung in einem Innenraum in einem Innenraumisolator 10a ohne Schirmstruktur, vgl. die linksseitige Ausbildung, untergebracht.

Das Kabel endet in einem geerdeten Gehäuse bzw. Metallgehäuse 16, gegenüber dem es durch einen Kabelisolierkörper 13 mit anschlussseitig sich erweiterndem Konus, vorzugsweise aus Silikon, elektrisch isoliert ist. Dieser Konus ist passend zum Aussenkonus 14. An den Übergangsstellen zum Gehäuseeingang und zum Aussenkonus 14 sind aussenseitig am Kabel Feldsteuerelektroden 12 aus einem leitenden oder halbleitenden Werkstoff, vorzugsweise aus Silikon, vorgesehen, die eine Verringerung der elektrischen Feldstärke an diesen kritischen Stellen bewirken. Dieses Metallgehäuse 16 lässt sich sehr einfach an ein fertig montiertes Endteil mit der Varistoranordnung 9 anschliessen.

Der Stromanschluss 6 ist lösbar angeordnet und kann nach dem Entfernen durch eine isolierende Prüfkappe ersetzt werden. Bei der Fertigung der Durchführung kann dann anstelle dieses Stromanschlusses zunächst die aus Isoliermaterial bestehende Prüfkappe eingebaut werden. Dadurch wird der Spannungsabfall im Überspannungsableiter erheblich reduziert. Die Durchführung und der damit verbundene Apparat oder die damit verbundene Anlage können nun mit Hochspannungsprüfimpulsen belastet werden, die den Ableiter sonst zerstören würden.

Fig. 4 zeigt schematisch in einem Längsschnitt einen Ausschnitt eines fertig montierbaren Endteils, das demjenigen gemäss Fig. 3 ähnlich ist. Anstelle des anschlussseitig sich verengenden Aussenkonus 14 ist hier ein anschlussseitig sich erweiternder Innenkonus 18 in den Durchführungsisolator 5 eingeformt. Die von den Kontakten 1a und 15a gebildete Steckverbindung befindet sich nun im Innenraumes der Varistoranordnung. Das Kabel mit seinem endseitigem Gegensteckkontakt 15a ist ausserhalb seiner Kabelisolationsschicht 2 von einem Kabelisolierkörper 17 mit anschlussseitig sich verengendem Aussenkonus, vorzugsweise aus Silikon, umgeben, der passend zu dem Innenkonus 18 des Isolators 5 ausgebildet ist und in eingestecktem Zustand des Kabels unmittelbar an diesen anschliesst. Das dielektrische Material des Körpers 17 ist innerhalb eines nicht dargestellten, geerdeten Gehäuses angeordnet, das demjenigen gemäss Fig. 3 entspricht. Auch Feldsteuerelektroden 12 können darin vorgesehen sein.

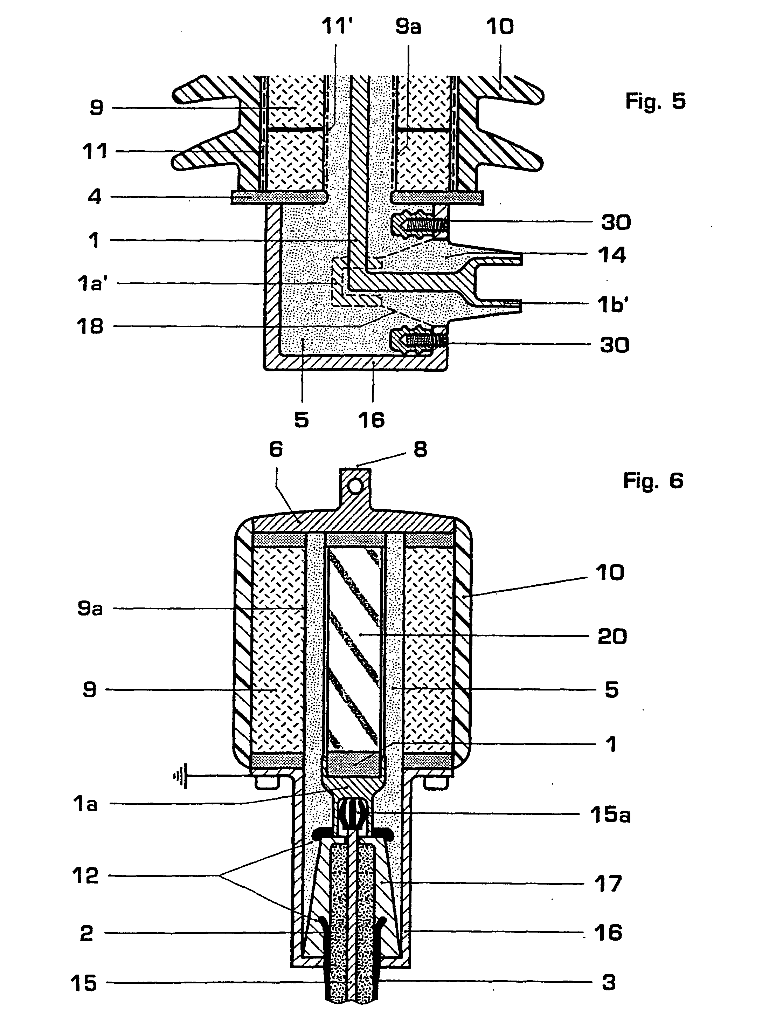

Fig. 5 zeigt in einem Ausschnitt schematisch einen Längsschnitt durch eine Freiluftdurchführung mit einem Winkelverbindungsteil. Im Bereich des Winkels des Stromleiters 1 kann eine zylindrische Winkelsteckbuchse 1a' vorgesehen sein. In den Durchführungsisolator 5 können - wie gestrichelt angedeutet - ein Innenkonus 18, eingeformt sein. Alternativ kann in den Isolator 5 auch ein anschlussseitig sich verengender Aussenkonus 14 eingeformt sein. 1b' bezeichnet dann eine endseitige Steckbuchse des Stromleiters 1. Ein in die Buchsen 1a' bzw. 1b' einzusteckendes, nicht dargestelltes Kabel oder eine Durchführung können mittels Schrauben 30 in einer Einsteckposition befestigt werden. Anstelle der Spanneinrichtung 11 ausserhalb der Varistoren der Varistoranordnung 9 kann auch eine Spanneinrichtung 11', vorzugsweise-aus einem glasfaserverstärkten Kunststoffrohr oder aus isolierenden Spannbändern, innerhalb der Varistorinnenfläche 9a vorgesehen sein; sie bewirkt eine mechanische Verstärkung und eine thermische und mechanische Schutzbarriere für die jeweilige Stromleicerisolierung 18, 14, falls der Varistor heiss oder überlastet wird. Diese Alternative gilt für alle Varistoranordnungen.

In die Varistoranordnung 9 kann eine Überstromsicherung 20, z. B. auf der Basis von bekannten Schmelzsicherungen, eingebaut sein, vgl. Fig. 6.

Die in der Figur 6 dargestellte Durchführung ähnelt derjenigen gemäss Fig. 4. Anstelle des Stromleiters 1 ist hier die Überstromsicherung 20 vorgesehen, die über den Steckkontakt 1a mit dem Steckkontakt 15a des Stromleiters 15 elektrisch verbunden ist. Der Durchführungsisolator 5 kann unterteilt ausgeführt sein (nicht dargestellt), z. B. steckerseitig aus Silikon und in der Umgebung der Überstromsicherung 20 aus Sand als dielektrischen Medien. Der Körper der Überstromsicherung 20 kann auch mit einem Porzellan- oder Kunststoffgehäuse umgeben sein, wie in konventionellen Sicherungen. Dabei kann der Spalt zwischen Überstromsicherung 20 und der Varistoranordnung 9 durch ein flexibles dielektrisches Medium ausgefüllt werden, wie bei der Ausführungsform gemäss Fig.1.

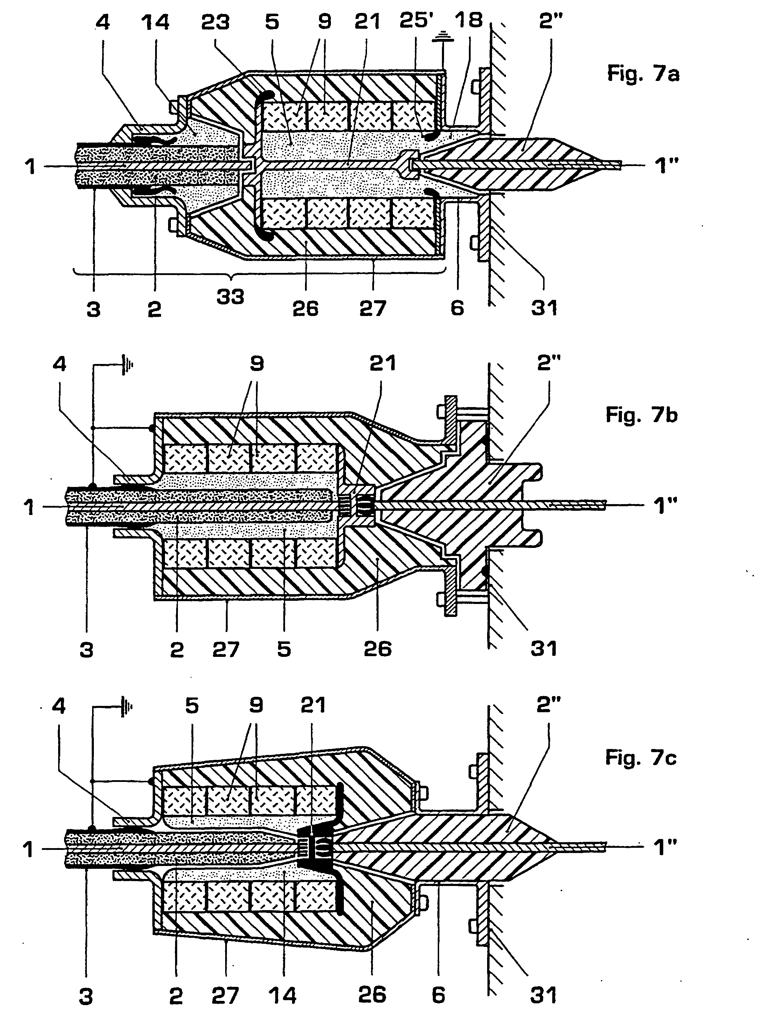

Die Fig. 7a - 7c zeigen in unterschiedlichen Varianten Längsschnitte durch jeweils als Kabelsteckverbindung 33 ausgebildete Durchführungen nach der Erfindung in Verbindung mit jeweils einer Gehäusedurchführung. Der Stromleiter 1 des Kabels ist über einen Steckverbinder 21 mit einem Geräte-, z. B. einem Transformatorstromleiter 1", elektrisch verbunden, welcher im Bereich einer Durchführungsöffnung einer elektrisch geerdeten Geräte-, z. B. einer Transformatorgehäusewand 31, von einem Geräte-, z. B. einem Transformatordurchführungsisolator 2", umgeben ist und sich anschlussseitig zur Kabelsteckverbindung 33 verjüngt, passend zu dem dielektrischen Medium mit einem anschlussseitig sich erweiternden Innenkonus 18.

Bei der Ausführung gemäss Fig. 7a ist die Gehäusedurchführung anschlussseitig wie die Kabelsteckverbindung gemäss Fig. 4 ausgeführt, wobei zwischen dem Isolator 2" und den Varistoren der Varistoranordnung 9 ein Durchführungsisolator 5 mit einem anschlussseitig sich erweiternden Innenkonus 18 vorgesehen ist. Feldsteuerelektroden 23 und 25' dienen der Reduktion der lokalen Feldstärke.

Bei der Ausführung gemäss Fig. 7b ist die linke Kabelsteckverbindung nichtsteckbar ausgeführt und bei der Ausführung gemäss Fig. 7c ähnlich demjenigen von Fig. 4. Anstelle einer Ausführung mit Innenkonus kann auch eine mit Aussenkonus, ähnlich den in Fig. 3 und 6 dargestellten, oder mit einer Winkelausführung, ähnlich derjenigen von Fig. 5, vorgesehen sein (nicht dargestellt). Für die Verbindung mit einer Kabelmuffe oder einer hohlzylindrischen Gerätedurchführung kann der Aussenkonus als Zylinder ausgegebildet sein. Für eine zylinderförmige Gerätedurchführung kann der Innenkonus als Hohlzylinder ausgebildet sein.

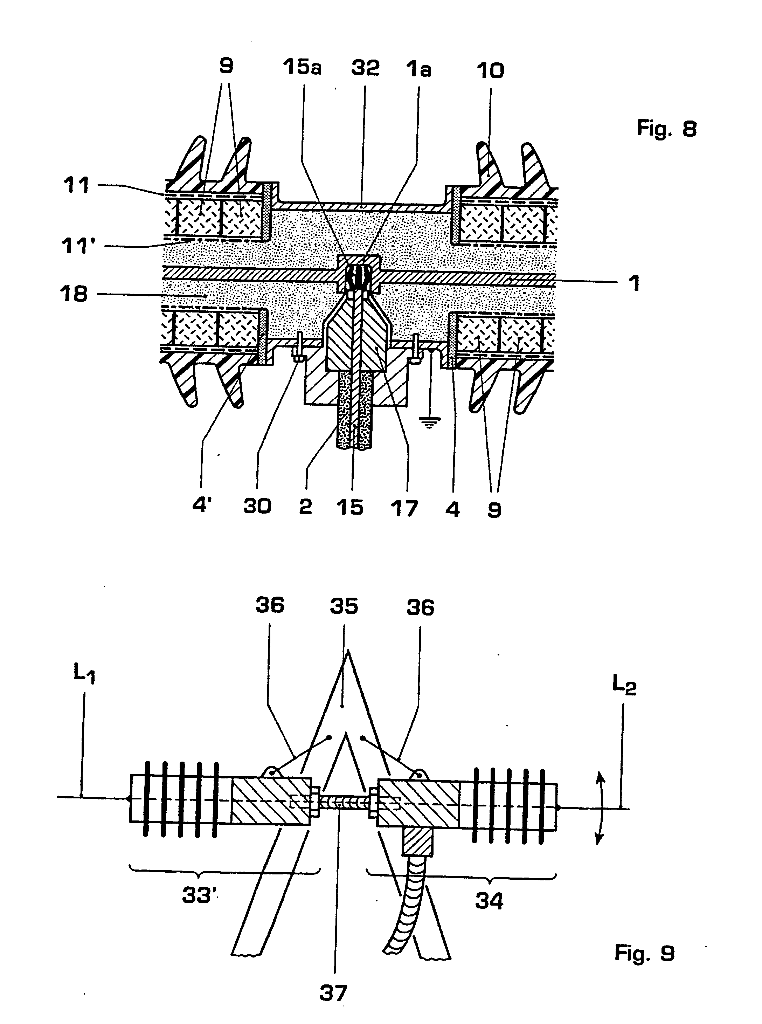

Fig. 8 zeigt ausschnittsweise einen Längsschnitt durch eine T-förmige Kabelsteckverbindung mit integrierten Varistoranordnungen 9 beidseits des T-Anschlusses. Dabei sind Stromanschlüsse 4, 4' der beiden Varistoranordnungen durch ein geerdetes, metallisches Kupplungsstück bzw. Kupplungsrohr 32 elektrisch miteinander verbunden. Ein Stromleiter 1, der vom Durchführungsisolator 5 mit einem anschlussseitig sich erweiternden Innenkonus 18 getragen ist, weist im Bereich des T-Anschlusses eine zylindrische Winkelsteckbuchse 1a auf, in welche der Steckkontakt 15a eines Kabels eingesteckt ist. Dieses Kabel weist anschlussseitig einen Kabelisolierkörper 17 mit sich verengendem Konus auf, passend zu demjenigen des dielektrischen Mediums mit dem anschlussseitig sich erweiternden Innenkonus 18. Diese Ausführung eignet sich besonders für eine Strommast-Aufhängung mit einem Kabelabgang. Eine Seite der durchgehenden Kabelverbindung kann auch mit einem Freileitungsisolator ohne Varistoranordnung ausgelegt sein (nicht dargestellt), was kostengünstiger ist.

Fig. 9 zeigt schematisch zwei über Längsstützen 36 an einem Strommast 35 aufgehängte Kabelendverschlüsse 33', 34, welche mittels eines flexiblen Verbindungsstückes 37 mechanisch entkoppelt sind. Dabei ist die Kabelsteckverbindung 34 mit einem Winkelanschluss ausgeführt, ähnlich demjenigen gemäss Fig. 8 mit nur einseitiger Varistoranordnung. Das flexible, mit einer geerdeten Abschirmung versehene und isolierte Verbindungsstück 37 nimmt die Bewegungen von Freileitungen (L1, L2) links und rechts vom Strommast 35 auf. Das isolierte Kabel 37 kann ein Stromleiter 1 mit Kabelisolationsschicht 2 und halbleitender Schutzschicht 3 sein; es kann auch formschlüssig in die metallischen Gehäuse der Kabelendverschlüsse 33', 34 integriert sein.

### BEZEICHNUNGSLISTE

- 1,1`,8 15,15',15": Stromleiter
- 1a,15a: Steckkontakte
- 2, 2': Kabelisolation
- 2": Transfomatordurchführungsisolator
- 3: halbleitende Schicht
- 4, 6: Stromanschlüsse
- 5: Durchführungsisolator
- 7: Verbindungsglied
- 9: Varistoranordnung
- 9a: Varistorinnenfläche
- 10,10a,10b: Isolatoren
- 11,11': Spanneinrichtungen
- 12,23 - 25': Feldsteuerelektroden
- 13,17: Kabelisolierkörper mit Konus
- 14, 28: Aussenkonus
- 15a,15a',15b' 15a",19: Steckkontakte
- 16: Gehäuse
- 18,18`: Innenkonus
- 20: elektrische Sicherung
- 21: Steckverbinder
- 26: Varistoraussenisolator
- 27: elektrische Abschirmung
- 30: Schrauben
- 31: Transformatorgehäusewand
- 32: Kupplungsrohr, Kupplungsstück
- 33,33': unverzweigte Kabelsteckverbindungen
- 34: Kabelsteckverbindung mit Winkelanschluss
- 35: Strommast
- 36: Längsstützen
- 37: isoliertes, flexibles Kabel
- L1,L2: Freileitungen

## Patentansprüche

1. Hochspannungs-Durchführung mit einem mit Hochspannung beaufschlagbaren Stromleiter (1), einer einen Abschnitt des Stromleiters umgebenden Varistoranordnung (9), zwei Stromanschlüssen (4, 6) von denen der eine (6) mit Hochspannung und der andere (4) mit Erde verbindbar ist, einem zwischen dem Stromleiter und der Varistoranordnung vorgesehenen Durchführungsisolator (5), und einer die Stromanschlüsse und die sandwichartig dazwischenliegende Varistoranordnung mit Kontaktkraft beaufschlagende Spannvorrichtung (11, 11'), **dadurch gekennzeichnet, dass** die Spannvorrichtung ein die beiden Stromanschlüsse (4,6) mit der Kontaktkraft verspannendes Isolierteil aufweist, und dass der Durchführungsisolator (5) als Formkörper ausgeführt ist und ein mit einer Führungsfläche versehenes Tragelement aufweist für einen mit dem Stromleiter verbundenen Kontakt (la) einer Steckverbindung mit einem Kabel oder einer Gehäusedurchführung eines elektrischen Apparats.

2. Durchführung nach Anspruch 1, **dadurch gekennzeichnet, dass** die Führungsfläche als Aussen- (14) oder als Innenkonus (18) ausgeführt ist.

3. Durchführung nach Anspruch 1, **dadurch gekennzeichnet, dass** die Führungsfläche als Mantelfläche eines Zylinders oder als Innenfläche eines Hohlzylinders ausgeführt ist

4. Durchführung nach einem der Ansprüche 1 bis 3, **dadurch gekennzeichnet, dass** der mit Hochspannung verbindbare Stromanschluss (6) lösbar angeordnet und durch eine isolierende Prüfkappe ersetzbar ist.

5. Durchführung nach einem der Ansprüche 1 bis 4, **dadurch gekennzeichnet, dass** in einen von der Varistoranordnung (9) umgebenen Abschnitt des Stromleiters (1) eine Überstromsicherung (20) eingebaut ist.

6. Durchführung nach einem der Ansprüche 1 bis 5, **dadurch gekennzeichnet, dass** die Spannvorrichtung (11') rohrförmig ausgebildet ist und zwischen dem Stromleiter (1) und der Varistoranordnung angeordnet ist.

7. Durchführung nach einem der Ansprüche 1 bis 6, **dadurch gekennzeichnet, dass** die Varistoranordnung (9) hohle Varistoren aufweist mit einem an die Form des Stromleiters angepassten Innenprofil und/oder einem ovalen oder rechteckigen Aussenprofil

8. Durchführung nach Anspruch 7, **dadurch gekennzeichnet, dass** die Varistoren in Richtung des Stromleiters (1) geteilt ausgeführt sind.

9. Durchführung nach einem der Ansprüche 7 oder 8, **dadurch gekennzeichnet, dass** die Varistoranordnung (9) axialsymmetrisch ausgebildet ist und in Richtung des Stromleiters (1) konus- oder flaschenförmige Kontur aufweist

10. Durchführung nach einem der Ansprüche 1 bis 9, **dadurch gekennzeichnet, dass** der Durchführungsisolator am Tragkörper spannungslinearisierend ausgebildet ist.

## Claims

1. High-voltage bushing having an electrical conductor (1) to which high voltage can be applied, having a varistor arrangement (9) surrounding one section of the electrical conductor, having two electrical connections (4, 6), one (6) of which can be connected to high voltage and the other (4) can be connected to earth, having a bushing insulator (5) provided between the electrical conductor and the varistor arrangement, and having a clamping apparatus (11, 11') which applies a contact force to the electrical connections and to the varistor arrangement located in between them like a sandwich, **characterized in that** the clamping apparatus has an insulating part which applies the contact force to the two electrical connections (4, 6), and **in that** the bushing insulator (5) is in the form of a moulding and has a supporting element, provided with a guide surface, for a contact (la) (which is connected to the electrical conductor) in a plug connection to a cable or to a housing bushing of an electrical apparatus.

2. Bushing according to Claim 1, **characterized in that** the guide surface is in the form of an external cone (14) or internal cone (18).

3. Bushing according to Claim 1, **characterized in that** the guide surface is in the form of an outer surface of a cylinder or an inner surface of a hollow cylinder.

4. Bushing according to one of Claims 1 to 3, **characterized in that** that electrical connection (6) which can be connected to high voltage is arranged detachably, and can be replaced by an insulating test cap.

5. Bushing according to one of Claims 1 to 4, **characterized in that** an overcurrent protective device (20) is installed in a section of the electrical conductor (1) surrounded by the varistor arrangement (9).

6. Bushing according to one of Claims 1 to 5, **characterized in that** the clamping apparatus (11') is tubular, and is arranged between the electrical conductor (1) and the varistor arrangement.

7. Bushing according to one of Claims 1 to 6, **characterized in that** the varistor arrangement (9) has hollow varistors with an internal profile matched to the shape of the electrical conductor, and/or with an oval or rectangular external profile.

8. Bushing according to Claim 7, **characterized in that** the varistors are split in the direction of the electrical conductor (1).

9. Bushing according to one of Claims 7 or 8, **characterized in that** the varistor arrangement (9) is axially symmetrical, and has a conical or bottle-shaped contour in the direction of the electrical conductor (1).

10. Bushing according to one of Claims 1 to 9, **characterized in that** the bushing insulator on the supporting body has a voltage-linearizing effect.

## Revendications

1. Traversée haute tension comprenant un conducteur (1) pouvant être parcouru par une haute tension, un agencement de varistances (9) entourant une portion du conducteur, deux connexions de courant (4, 6) dont l'une (6) peut être connectée à la haute tension et l'autre (4) à la terre, un isolateur de traversée (5) prévu entre le conducteur et l'agencement de varistances, et un dispositif de serrage (11, 11') appliquant une force de contact aux connexions de courant et à l'agencement de varistances disposée en sandwich entre elles, **caractérisée en ce que** le dispositif de serrage présente une partie d'isolation serrant les deux connexions de courant (4, 6) avec la force de contact, et **en ce que** l'isolateur de traversée (5) est réalisée sous forme de corps moulé et présente un élément de support pourvu d'une surface de guidage pour un contact (la), connecté au conducteur, d'une connexion par enfichage à un câble ou une traversée de boîtier d'un appareil électrique.

2. Traversée selon la revendication 1, **caractérisée en ce que** la surface de guidage est réalisée sous forme de cône extérieur (14) ou de cône intérieur (18).

3. Traversée selon la revendication 1, **caractérisée en ce que** la surface de guidage est réalisée sous la forme d'une surface d'enveloppe d'un cylindre ou sous la forme d'une surface intérieure d'un cylindre creux.

4. Traversée selon l'une quelconque des revendications 1 à 3, **caractérisée en ce que** la connexion de courant (6) pouvant être connectée à la haute tension est disposée de manière desserrable et peut être remplacée par un capuchon de contrôle isolant.

5. Traversée selon l'une quelconque des revendications 1 à 4, **caractérisée en ce qu'**une protection contre les surintensités (20) est intégrée dans une portion du conducteur (1) entourée par l'agencement de varistances (9).

6. Traversée selon l'une quelconque des revendications 1 à 5, **caractérisée en ce que** le dispositif de serrage (11') est réalisé en forme tubulaire et est disposé entre le conducteur (1) et l'agencement de varistances.

7. Traversée selon l'une quelconque des revendications 1 à 6, **caractérisée en ce que** l'agencement de varistances (9) présente des varistances creuses avec un profil intérieur adapté à la forme du conducteur et/ou un profil extérieur ovale ou rectangulaire.

8. Traversée selon la revendication 7, **caractérisée en ce que** les varistances sont divisées dans la direction du conducteur (1).

9. Traversée selon l'une quelconque des revendications 7 ou 8, **caractérisée en ce que** l'agencement de varistances (9) est réalisée avec une symétrie axiale et présente un contour en forme de cône ou de bouteille dans la direction du conducteur (1).

10. Traversée selon l'une quelconque des revendications 1 à 9, **caractérisée en ce que** l'isolateur de traversée est réalisé de manière à linéariser la tension sur le corps de support.
